# EUROPÄISCHE PATENTSCHRIFT

(11) **EP 3 324 069 B1**
(45) Veröffentlichungstag und Bekanntmachung des Hinweises auf die Patenterteilung: **20.03.2019**
(21) Anmeldenummer: 17200732.0
(22) Anmeldetag: 09.11.2017
(51) Int. Cl.: F16D 66/02

(54) **VERFAHREN ZUR KONTROLLE DES BREMSBELAGVERSCHLEISSES EINER GLEITSATTEL-SCHEIBENBREMSE**
METHOD FOR MONITORING THE BRAKE PAD WEAR OF A FLOATING CALLIPER DISC BRAKE
PROCÉDÉ DE CONTRÔLE DE L'USURE D'UN FREIN À DISQUE À ÉTRIER FLOTTANT

(30) Priorität: 10.11.2016 DE 102016121569
(43) Veröffentlichungstag der Anmeldung: 23.05.2018
(73) Patentinhaber: BPW Bergische Achsen KG, 51674 Wiehl (DE)
(72) Erfinder: Renner, Celina, 51597 Morsbach (DE)
(74) Vertreter: Bungartz Christophersen Partnerschaft mbB Patentanwälte

(56) Entgegenhaltungen:
- DE-A1-102012 017 961
- DE-A1-102015 001 152
- DE-B3-102012 007 021

## Beschreibung

Die Erfindung betrifft ein Verfahren zur Kontrolle des Bremsbelagverschleißes einer Gleitsattel-Scheibenbremse, welche einen chassisfesten Bremsträger und einen diesem gegenüber verschieblich angeordneten, eine Bremsscheibe und die Bremsbeläge übergreifenden Bremssattel umfasst, wobei
- Verschiebungen des Bremssattels relativ zu dem Bremsträger als Wegsignale mittels eines Positions- oder eines Wegsensors erfasst werden,
- Bremsdrücke als Drucksignale erfasst werden,
und die so erfassten Weg- und Drucksignale einer Auswerte- und Kontrolleinheit zugewiesen werden.

Bei Scheibenbremsen für Fahrzeuge ist auch außerhalb der Serviceintervalle eine Überprüfung des Verschleißes an den Bremsbelägen erforderlich. Hierzu sind in vielfältigen Ausführungen elektrische Verschleißsensoren bekannt. So ist aus der DE 102 11 813 A1 für eine Gleitsattel-Scheibenbremse ein mit Ultraschall arbeitendes Sensierungsverfahren bekannt. Bestandteile sind ein reflektierbare Signale abgebender Sender und ein Empfänger für die reflektierten Signale, die beide mit einer Auswerteelektronik verbunden sind. Der Ultraschallsender und der Ultraschallempfänger sind gegenüber der Bremsscheibe und den Rückenplatten der Bremsbeläge ortsfest zu installieren. Nachteilig ist die relativ aufwendige Anordnung von Sender und Empfänger. Eine Nachrüstung bereits vorhandener Gleitsattel-Scheibenbremsen ist schwierig.

Verfahren zum Überprüfen des Bremsbelagverschleißes einer Gleitsattel-Scheibenbremse sind ferner aus der DE 37 07 821 A1 und der DE 10 2012 017 961 A1 bekannt. In beiden Fällen sind Ausgangspunkt bei der Ermittlung des Bremsbelagverschleißes Wegsignale, welche durch einen Positions- oder einen Wegsensor erfasst werden und Verschiebungen des Bremssattels relativ zu dem Bremsträger abbilden. Die so erfassten Wegsignale werden einer Steuer- und Kontrolleinheit zugewiesen, die für den Fall eines einen vorgegebenen Wert übersteigenden Werts ein Signal generiert, welches dem Fahrer die Notwendigkeit eines Austauschs der Bremsbeläge anzeigt.

Die bekannten Kontrollverfahren arbeiten relativ genau, soweit die Störeinflüsse an der Bremse gering sind. Hingegen lässt die Genauigkeit der Verschleißermittlung nach, soweit die im Fahrbetrieb auftretenden Bewegungen des Bremssattels Störeinflüssen unterliegen, etwa aufgrund der während der Messung herrschenden Belastungszustände der Scheibenbremse. Ist z. B. die Zuspannung der Bremse nur gering, so dass es zu keiner Anlage der Bremsbeläge an der Bremsscheibe gekommen ist, oder ist andererseits der Druck der Bremszuspannung so hoch, dass Verformungseffekte im Bremssattel selbst oder in der Längsführung des Bremssattels auftreten, so können die mit den bekannten Verfahren ermittelten Verschleißwerte nur bedingt aussagekräftig sein.

Der Erfindung liegt daher die **Aufgabe** zugrunde, eine für eine kontinuierliche elektronische Auswertung geeignete Überprüfung der Belagdicke von Bremsbelägen einer Gleitsattel-Scheibenbremse zu schaffen, wobei die ausgewerteten Signale reproduzierbar und weitgehend frei von Störeinflüssen sein sollen, um zu einer hohen Genauigkeit bei der Bestimmung des objektiven Bremsbelagverschleißes zu gelangen.

Zur **Lösung** der Aufgabe wird ein Verfahren zur Überprüfung des Bremsbelagverschleißes vorgeschlagen, welches durch die folgenden Schritte gekennzeichnet ist:
a) Nach Bestückung der Bremse mit neuen, unbenutzten Bremsbelägen Bestimmen oder Setzen eines Wegsignal-Anfangswerts,
b) im Laufe des weiteren Bremsbetriebs Erfassen eines oder mehrerer Wegsignale und vorläufiges Speichern des so erfassten Signals oder eines gemittelten Werts der so erfassten Signale als aktueller Positionswert, soweit zum jeweiligen Erfassungszeitpunkt das Drucksignal in dem Wertebereich P1 bis P2 liegt,
c) mehrfaches Wiederholen des Schritts b), wobei der zuletzt aktualisierte Positionswert als gültiger Verschleißwert dann geführt wird, wenn seine Differenz zu dem Wegsignal-Anfangswert um ein vorgegebenes Maß größer als die Differenz zuvor gespeicherter Positionswerte zu dem Wegsignal-Anfangswert ist,
d) Abgabe eines Verschleißsignals durch die Auswerte- und Kontrolleinheit dann, wenn die Differenz zwischen dem Verschleißwert und dem Wegsignal-Anfangswert einen Maximalwert übersteigt.

Bei diesem Verfahren werden durch die Steuer- und Kontrolleinheit nur dann Verschiebungen des Bremssattels relativ zu dem Bremsträger wiedergebende Sensorwerte für die Ermittlung des Belagverschleißes verarbeitet, wenn zum Zeitpunkt der Signalerfassung eine Belastungssituation der Scheibenbremse vorliegt, die reproduzierbare Messergebnisse erwarten lässt. Denn die Genauigkeit der Verschleißermittlung ist geringer, soweit die im Fahrbetrieb auftretenden Bewegungen des Bremssattels Störeinflüssen unterliegen, insbesondere wegen eines während der Signalerfassung herrschenden, das Messergebnis verfälschenden Belastungszustandes der Bremse. Ist z. B. zum Zeitpunkt der Signalerfassung die Zuspannung der Bremse nur gering, so dass es zu keiner Anlage der Bremsbeläge an der Bremsscheibe gekommen ist, oder ist andererseits die Bremszuspannung so hoch, dass Verformungseffekte im Bremssattel selbst oder in der Längsführung des Bremssattels auftreten, so können die dabei ermittelten Verschleißwerte nur bedingt aussagekräftig sein.

Insgesamt wird mit der Erfindung daher ein für eine elektronische Auswertung besonders geeignetes Verfahren der kontinuierlichen Überprüfung der Belagdicke geschaffen, bei dem Messwerte nur verarbeitet werden, soweit sich der Bremsdruck zum Messzeitpunkt in einem vorgegebenen Bereich befindet. Davon wird dann ausgegangen, wenn das an die Kontrolleinheit gelieferte Drucksignal im Messzeitpunkt in einem Wertebereich P1 bis P2 liegt. Die unter diesen Bedingungen ausgewerteten Weg- oder Positionssignale sind reproduzierbar und weitgehend frei von Störeinflüssen, um so zu einer genaueren Bestimmung des objektiven Bremsbelagverschleißes zu gelangen.

Indem mittels des Positions- oder Wegsensors Verschiebungen des Bremssattels relativ zu dem Bremsträger als Wegsignale erfasst werden, ist Ergebnis ein Weg bzw. eine Distanz, welcher bzw. welche für den Verschleiß des einen, üblicherweise des fahrzeugaußen angeordneten Bremsbelags charakteristisch ist. Hingegen wird der Verschleiß an dem anderen, üblicherweise fahrzeuginnen angeordneten Bremsbelag nicht unmittelbar abgebildet. Häufig zeigen die zu beiden Seiten der Bremsscheibe angeordneten Bremsbeläge aber einen zumindest ähnlichen Abnutzungsgrad, so dass mittels des Verfahrens verlässliche Rückschlüsse auch für die noch vorhandene Belagdicke des anderen Bremsbelags gezogen werden können.

Andererseits besteht die Möglichkeit, durch ein Subtraktionsverfahren auch den Verschleiß des anderen Bremsbelags rechnerisch zu ermitteln. Dies gelingt, wenn die Steuer- und Kontrolleinheit zusätzlich ein Subtraktionsglied aufweist. Erforderlich ist in diesem Fall ein weiterer Sensor. Dieser ist in der Weise ausgestaltet, dass er den gesamten Zustellweg der Scheibenbremse erfasst, also jene Länge, um die der gegen den innenliegenden Bremsbelag arbeitende Druckstempel sich in Bezug auf den Bremssattel, in dem sich der Druckstempel befindet, bewegt hat. Von dieser Länge wird im Subtraktionsglied der Steuer- und Kontrolleinheit der durch den Positions- oder Wegsensor erfasste Längsweg subtrahiert, um so auch jenes Maß zu erhalten, um das sich die Belagdicke des anderen, üblicherweise fahrzeuginneren Bremsbelags reduziert hat.

Vorzugsweise erfolgt das Bestimmen des Anfangswerts, indem eines oder mehrere Wegsignale erfasst werden, soweit zum jeweiligen Erfassungszeitpunkt das Drucksignal in einem vorgegebenen Wertebereich P1 bis P2 liegt. Das so erfasste Wegsignal oder ein gemittelter Wert der so erfassten Wegsignale wird als der Wegsignal-Anfangswert gespeichert.

Vorzugsweise ist der untere Druckwert P1 des Wertebereichs mindestens gleich jenem Druckwert, bei dem beide Bremsbeläge erstmals in Kontakt mit der Bremsscheibe gelangen. Der obere Druckwert P2 des Wertebereichs wiederum ist niedriger als jener Druckwert, bei dem eine Verformung des Bremssattels aufgrund der Bremskräfte einsetzt. Das erneute Erfassen und Verarbeiten von Wegsignalen wird daher auf Situationen beschränkt, bei denen die Scheibenbremse mit Drücken betrieben wird, die zwar einerseits zu einem Anlegen beider Bremsbeläge an die Bremsscheibe ausreichend sind, aber andererseits nicht so groß sind, dass es zu Verformungsprozessen im Bremssattel selbst oder in dessen Führung, oder auch in den Bremsbelägen oder in anderen Komponenten der Bremzuspannung kommt.

Ist das bremsdruckerzeugende Medium Druckluft, sollte der untere Druckwert P1 des Druckwertebereichs mindestens 80 kPa und der obere Druckwert P2 höchstens 150 kPa betragen.

Gemäß einer Ausgestaltung des Verfahrens erfolgt das erneute Erfassen von Wegsignalen nur, wenn die unmittelbar vorhergehenden Drucksignale tiefer als der untere Druckwert P1 des Druckwertebereichs P1 bis P2 liegen und vorzugsweise tiefer als ein Grenzdruck, bei dem der Bremssattel seine geöffnete Position einnimmt.

Mit einer weiteren Ausgestaltung des Verfahrens wird vorgeschlagen, dass außerdem die Fahrzeuggeschwindigkeit erfasst, und der Auswerte- und Kontrolleinheit ein entsprechendes Geschwindigkeitssignal zugewiesen wird, wobei das erneute Erfassen von Wegsignalen nur bei gleichzeitigem Vorliegen eines vorgegebenen Mindest-Geschwindigkeitssignals erfolgt. Zum Beispiel kann das Mindest-Geschwindigkeitssignal einer Fahrzeuggeschwindigkeit von 25 km/h oder mehr entsprechen.

Weitere Einzelheiten und Vorteile der Erfindung ergeben sich aus der nachfolgenden Beschreibung eines in den Figuren schematisch dargestellten Ausführungsbeispiels. Es zeigen:
- Fig. 1: eine stark schematisch gehaltene Darstellung einer mit Maßnahmen zur Kontrolle des Bremsbelagverschleißes versehenen Nutzfahrzeugbremse in der Bauart als Gleitsattel-Scheibenbremse;
- Fig. 2: in Darstellung übereinander den zeitlichen Verlauf während Bremsvorgängen einerseits der Drucksignale eines Drucksensors, und andererseits der Wegsignale eines Positions- oder eines Wegsensors.

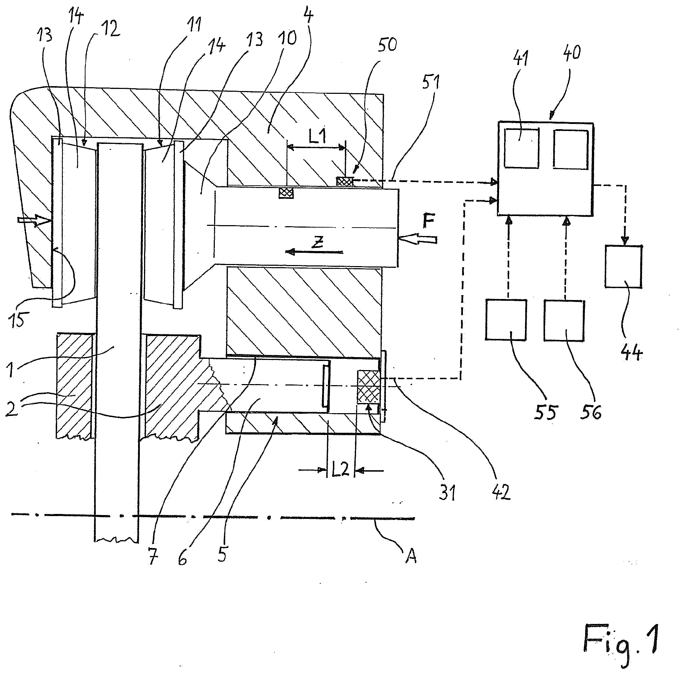

Die Figur 1 zeigt eine auf der Raddrehachse A rotierende Bremsscheibe 1 einer Gleitsattel-Scheibenbremse. Starr an einem nicht dargestellten Achselement des Fahrzeugs ist ein Bremsträger 2 befestigt. Entsprechend dem Prinzip einer Scheibenbremse vom Gleitsattel- bzw. Schwimmsatteltyp ist an dem Bremsträger 2 mittels einer Längsführung 5 der Bremssattel 4 der Scheibenbremse gelagert, wobei eine Relativbewegung nur in Längsrichtung der Raddrehachse A möglich ist.

Die Längsführung 5 setzt sich zusammen aus einem mit seinem einen Ende starr an dem Bremsträger 2 befestigten Führungsholm 6 sowie einer korrespondierenden, in dem Bremssattel 4 ausgebildeten Führungsbohrung 7. Üblicherweise verfügen Scheibenbremsen nicht nur über eine solche Längsführung 5, sondern über zwei Längsführungen, von denen die eine das sogenannte Festlager, und die andere das sogenannte Loslager bildet.

Bestandteil des Bremssattels 4 ist ein darin parallel zu der Raddrehachse A geführter Druckstempel 10, welcher mit einer Kraft F gegen den fahrzeuginneren Bremsbelag 11 der Scheibenbremse arbeitet. Die Zuspannung des Druckstempels 10 kann hydraulisch oder pneumatisch erfolgen. Bei Nutzfahrzeugbremsen erfolgt die Betätigung pneumatisch, wobei ein an der Rückseite des Bremssattels 4 angeflanschter, druckluftbetriebener Bremszylinder über einen in dem Bremssattel 4 angeordneten Verstärkungsmechanismus auf den Druckstempel 10 arbeitet.

In diesen Zuspannmechanismus kann noch eine Nachstellvorrichtung integriert sein. Diese sorgt für ein gleichbleibendes Lüftspiel der Bremse unabhängig vom Verschleißfortschritt der Bremsbeläge, die sich jeweils aus einer Belagrückenplatte 13 und dem eigentlichen Reibbelag 14 zusammensetzen.

Der Bremssattel 4 übergreift von außen die Anordnung aus Bremsscheibe 1 und den beiden Bremsbelägen 11, 12. Eine fahrzeugaußen angeordnete Druckfläche 15 des Bremssattels 4 stützt sich gegen die Belagrückenplatte 13 des fahrzeugäußeren Bremsbelags 12 ab. Die Druckfläche 15 ist dem Druckstempel 10 gegenüberliegend an dem Bremssattel 4 ausgebildet. Auf der anderen Seite der Bremsscheibe arbeitet der Druckstempel 10 unmittelbar gegen die Belagrückenplatte 13 des fahrzeuginneren Bremsbelags 11.

Im Bereich des freien Endes des Führungsholms 6 befindet sich an dem Bremssattel 4 ein Sensor 31, welcher als Positionssensor oder als Wegsensor ausgebildet ist. Der Positions- oder Wegsensor 31 ist hier innen an einer Kappe befestigt, wodurch er eine Lage mit einem Längsabstand L2 gegenüberliegend zu der Stirnfläche des Führungsholms 6 einnimmt. Dort, an der Stirnfläche, befindet sich ein durch den Sensor 31 detektierbares Element. Der Sensor 31 zusammen mit dem detektierbaren Element arbeitet also als Positions- bzw. Wegsensor und ist dazu eingerichtet, die Relativposition oder den Relativweg des Bremssattels 4 gegenüber dem chassisfesten Bremsträger 2 zu erfassen und ein entsprechendes Wegsignal zu generieren.

Der Positions- oder Wegsensor 31 schafft die messtechnische Voraussetzung für eine kontinuierliche, periodische oder situationsgesteuerte Sensierung des Längenwerts L2, aus dem rechnerisch die noch vorhandene Reibbelagdicke des äußeren Bremsbelags 12 herleitbar ist. Der Sensor 31 lässt sich im Bereich der Längsführung 5 aus Führungsholm 6 und Führungsbohrung 7 mit relativ geringem Aufwand einbauen, und ggf. auch bei einer vorhandenen Scheibenbremse nachrüsten.

Ist neben dem Sensor 31 noch mindestens ein weiterer Sensor 50 vorhanden, welcher als Längenwert L1 den bisher, d. h. seit dem letzten Austausch beider Bremsbeläge 11, 12 durch Nachstellung der Scheibenbremse zurückgelegten Zustellweg Z erfasst, ermöglicht ein Subtraktionsverfahren auch die Berechnung der Reibbelagdicke und somit des Reibbelagverschleißes an dem anderen, also dem fahrzeuginneren Bremsbelag 11.

Hierzu gelangt signaltechnisch über den elektrischen Signalausgang 42 des Sensors 31 der Längenwert L2, und über den elektrischen Signalausgang 51 des weiteren Sensors 50 der Längenwert L1 zu einem Subtraktionsglied 41, welches Bestandteil einer Auswerte- und Kontrolleinheit 40 ist. Im Subtraktionsglied 41 wird L2 von L1 abgezogen, und so ein Wert erhalten, welcher repräsentativ für die noch vorhandene Reibbelagdicke an dem fahrzeuginneren Bremsbelag 11 ist.

Bestandteil der Vorrichtung ist ferner ein signaltechnisch mit der Auswerte- und Kontrolleinheit 40 verbundenes, vorzugsweise optisch oder akustisch arbeitendes Anzeigeelement 44. Dieses erzeugt eine Warnmeldung, wenn ein in der Auswerte- und Kontrolleinheit 40 als Maximalwert vorgegebener Verschleißgrad erreicht oder überschritten ist. Das Anzeigeelement 44 ist vorzugsweise für den Fahrzeuglenker gut sichtbar, z. B. in der Armaturentafel des Fahrzeugs, angeordnet.

Die Belagdickenbestimmung unter Verwendung der über den Signalausgang 42 abgegebenen Wegsignale des Sensors 31 arbeitet dann relativ genau, wenn die Störeinflüsse in der Bremse gering sind. Hingegen lässt die Genauigkeit prinzipbedingt nach, soweit die Bewegungen des Bremssattels 4 Störeinflüssen unterliegen, etwa durch Erschütterungen im Fahrbetrieb oder aufgrund der während der Messung herrschenden Belastungszustände in dem Bremssattel 4 oder in der Längsführung 5 des Bremssattels. Ist z. B. zum Zeitpunkt der Signalerfassung durch den Sensor 31 die Zuspannung der Bremse nur gering, so dass es zu keiner Anlage der Bremsbeläge 11, 12 an der Bremsscheibe 1 gekommen ist, oder ist andererseits die Zuspannung der Bremse so hoch, dass Verformungseffekte im Bremssattel 4 selbst oder Verspannungen in der Führung des Bremssattels 4 auftreten, so sind die dabei ermittelten Wegsignale wenig aussagekräftig. Sie sollten daher bei der Berechnung des Belagverschleißes nicht herangezogen werden.

Daher wird ein Auswerteverfahren vorgeschlagen, bei dem die Auswerte- und Kontrolleinheit 40 die durch den Sensor 31 aufgenommenen Weg- bzw. Positionssignale nur verarbeitet, wenn sich der Bremsdruck der Scheibenbremse zum Messzeitpunkt innerhalb eines vorgegebenen Bereichs befindet.

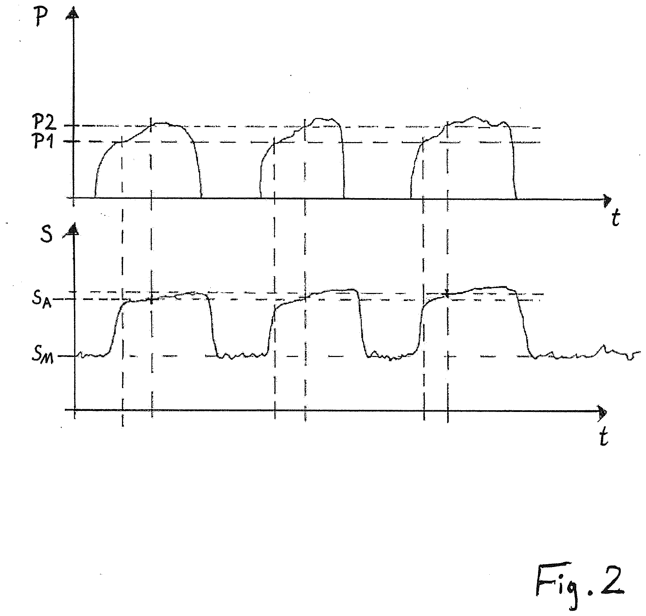

Gemäß Figur 2, in der in der oberen Darstellung der Druckverlauf über der Zeitachse t für drei Bremszuspannungen aufgetragen ist, ist der Bereich dann eingehalten, wenn das von einem Drucksensor an die Auswerte- und Kontrolleinheit 40 gelieferte Drucksignal 55 im Messzeitpunkt in einem Wertebereich liegt, der nach unten durch einen Druckwert P1 und nach oben durch einen Druckwert P2 begrenzt ist.

In der unteren Darstellung der Figur 2 ist über derselben Zeitachse t die Bewegung S des Bremssattels 4 relativ zu dem Bremsträger 2 aufgetragen. Bei nicht betätigter Bremse beträgt die Position des Bremssattels S_{M}, wobei dies ein Mittelwert ist, da aufgrund äußerer Einwirkungen kleinere Schwankungen auftreten. Mit dem Aufbau von Bremsdruck verändert sich die Position des Bremssattels stark, bis es bei S_{A} zur Anlage der Bremsbeläge an der Bremsscheibe kommt. Bei noch stärkerem Bremsdruck beginnt der Bereich der Bremszuspannung, der durch einen deutlichen Druckanstieg bei nur geringer weiterer Bewegung S gekennzeichnet ist.

Der untere Druckwert P1 ist mindestens gleich jenem Druck, bei dem, nachdem die Bremse zuvor drucklos oder nahezu drucklos war, beide Bremsbeläge 11, 12 erstmals in Kontakt mit der Bremsscheibe 1 gelangen. Der obere Druckwert P2 ist niedriger als jener Druck, bei dem erfahrungsgemäß die Verformung des Bremssattels 4 aufgrund der Bremskräfte einsetzt. Bei einer Druckluftbremse für ein Nutzfahrzeug kann der untere Druckwert P1 z. B. 80 kPa betragen, der obere Druckwert P2 z. B. 150 kPa.

Das Erfassen und vor allem das Verarbeiten von Wegsignalen des Sensors 31 wird daher auf Situationen beschränkt, in denen die Scheibenbremse, nachdem diese zuvor unbetätigt war, mit Drücken betrieben wird, die zwar einerseits für das Anlegen beider Bremsbeläge 11, 12 an die Bremsscheibe 1 ausreichen, aber andererseits nicht so groß sind, dass es zu das Messergebnis verfälschenden Verformungsprozessen oder Verspannungsprozessen kommt, sei dies im Bremssattel selbst oder im Bereich der Bremsbeläge oder anderer Komponenten der Bremszuspannung.

Außerdem erfolgt eine Auswertung der Wegsignale des Sensors 31 nur, wenn die Scheibenbremse unmittelbar zuvor passiv war, d. h. unbetätigt und ohne nennenswerten Systemdruck. Wegsignale werden daher nur verarbeitet, wenn die unmittelbar vorhergehenden Drucksignale zumindest niedriger sind als der untere Druckwert P1 des Druckwertebereichs P1 bis P2 und vorzugsweise niedriger als ein Grenzdruck, bei dem der Bremssattel 4 seine geöffnete Position einnimmt, d. h. beide Bremsbeläge 11, 12 sind vollständig von der Bremsscheibe 1 gelöst.

Außerdem erfolgt eine Auswertung der Wegsignale nur, wenn auch die Fahrzeuggeschwindigkeit in geeigneter Weise berücksichtigt wird. Hierzu erhält die Auswerte- und Kontrolleinheit 40 außerdem ein Geschwindigkeitssignal 56. Das Auswerten von Wegsignalen erfolgt nur, wenn für den Messzeitpunkt eine vorgegebene MindestGeschwindigkeit festgestellt wird. Diese kann zum Beispiel 25 km/h betragen.

Um im Bremsbetrieb eine Aussage über die Größe der Abnutzung des Bremsbelags 12 treffen zu können, muss zunächst die Ausgangssituation festgestellt werden, d.h. die Situation bei neuen, unbenutzten Bremsbelägen 11, 12. Bei dem Verfahren wird daher bei neu eingebauten Bremsbelägen zunächst ein Wegsignal-Anfangswert S_{O} gesetzt. Dies kann z. B. ein aus der Praxis abgeleiteter Erfahrungswert sein. Alternativ kann der Anfangswert S_{O} aus Messwerten bestimmt werden. In diesem Fall erfolgt, nach vorherigem Einbau neuer Bremsbeläge, ein Erfassen eines oder mehrerer Wegsignale sowie das Speichern des so erfassten Signals oder eines gemittelten Werts der so erfassten Signale als Wegsignal-Anfangswert S_{O}. Dieses Erfassen erfolgt nur, wenn zum jeweiligen Erfassungszeitpunkt das Drucksignal 55 in dem vorgegebenen Wertebereich P1 bis P2 liegt, und das gelieferte Geschwindigkeitssignal 56 zeigt, dass sich das Fahrzeug mit der vorgegebenen Mindestgeschwindigkeit bewegt.

Der so gesetzte oder bestimmte Wegsignal-Anfangswert S_{O} wird in der Auswerte- und Kontrolleinheit 40 abgespeichert, und er wird fortan bei jeder Neuberechnung des Bremsbelagverschleißes als Anfangswert und Vergleichswert herangezogen.

Im Fall der Bestimmung des Anfangswerts So aufgrund von Messwerten wäre es im Prinzip ausreichend, mittels des Positions- oder Wegsensors 31 nur einmal, d. h. zu einem einzigen Zeitpunkt, ein Wegsignal zu erfassen. Um jedoch systemimmanente Schwankungen auszugleichen, ist es vorteilhafter, aufeinanderfolgend mehrfach Wegsignale zu erfassen und sodann einen in geeigneter Weise gemittelten Wert der so erfassten Wegsignale zu bilden, und nur diesen gemittelten Wert bei der Bestimmung des Anfangswerts S_{O} zugrundezulegen.

Im Laufe des weiteren Bremsbetriebs erfolgt dann laufend oder regelmäßig beim Beginn von Bremszuspannungen ein erneutes Erfassen eines oder mehrerer Wegsignale durch den Sensor 31 und das vorläufige Speichern im Sinne eines Vorhaltens des so erfassten Werts. Der Wert wird hierfür in der Auswerte- und Kontrolleinheit 40 vorläufig als aktueller Positionswert S_{P} gespeichert. Wiederum erfolgt ein Erfassen und/oder Auswerten nur, wenn zum jeweiligen Erfassungszeitpunkt das Drucksignal 55 in dem Wertebereich P1 bis P2 liegt, und zusätzlich die Geschwindigkeitsvorgabe gemäß Geschwindigkeitssignal 56 erfüllt ist.

Auch bei dem Erfassen aktueller Positionswerte S_{P} wäre es im Prinzip ausreichend, mittels des Positions- oder Wegsensors 31 nur einmal, d. h. zu einem Zeitpunkt, ein Wegsignal zu erfassen. Um jedoch systemimmanente Schwankungen auszugleichen, ist es vorteilhafter, aufeinanderfolgend mehrfach bzw. eine Mehrzahl von Wegsignalen zu erfassen und sodann einen in geeigneter Weise gemittelten Wert der so erfassten Wegsignale zu bilden, und nur diesen gemittelten Wert bei der Bestimmung des aktuellen Positionswerts S_{P} zugrundezulegen.

Bei dem nächsten Erfassen eines oder mehrerer Wegsignale wird aus dem so aktualisierten Positionswert S_{P} nur dann ein fortan gültiger neuer Verschleißwert S_{V} gebildet und gespeichert, wenn, unter Berücksichtigung einer auf Erfahrungswerten beruhenden Wertestreuung, dessen Differenz zu dem Anfangswert S_{O} um ein bestimmtes, vorgegebenes Maß größer ist als die Differenz des zuvor gespeicherten Verschleißwertes Sv zu dem Anfangswert S_{O}.

Die Abgabe eines Verschleißsignals durch die Auswerte- und Kontrolleinheit 40, vorzugsweise über das Anzeigeelement 44, erfolgt dann, wenn die Differenz zwischen dem gültigen Verschleißwert S_{V} und dem Anfangswert S_{O} einen intern vorgegebenen Maximalwert übersteigt. In diesem Fall wird davon ausgegangen, dass der Bremsbelag 12 soweit abgenutzt ist, dass ein Austausch der Bremsbeläge erfolgen sollte.

Mittels des genannten Subtraktionsverfahrens erfolgt die Berechnung auch des Reibbelagverschleißes an dem anderen Bremsbelag 11. In dem Subtraktionsglied 41 der Auswerte- und Kontrolleinheit 40 wird hierzu der Weg bzw. Längenwert L2 von dem Weg bzw. Längenwert L1 abgezogen, und so ein Wert erhalten, welcher repräsentativ für die noch vorhandene Belagdicke an dem Bremsbelag 11 ist.

Sofern die Kontrolleinheit 40 der Bremse dafür ausgebildet ist, einen Belagwechsel automatisch zu erkennen, erfolgt anschließend erneut zunächst das Bestimmen des Wegsignal-Anfangswerts. Zudem wird der letzte Verschleißwert S_{V} automatisch zurückgesetzt.

### Liste der Bezugszeichen und der Indizes

- 1: Bremsscheibe
- 2: Bremsträger
- 4: Bremssattel
- 5: Längsführung
- 6: Führungsholm
- 7: Führungsbohrung
- 10: Druckstempel
- 11: innenliegender Bremsbelag
- 12: außenliegender Bremsbelag
- 13: Belagrückenplatte
- 14: Reibbelag
- 15: Druckfläche
- 31: Sensor
- 40: Auswerte- und Kontrolleinheit
- 41: Subtraktionsglied
- 42: Signalausgang
- 44: Anzeigeelement
- 50: weiterer Sensor
- 51: Signalausgang
- 55: Drucksignal
- 56: Geschwindigkeitssignal

- A: Raddrehachse
- F: Kraft
- L1: Längenwert
- L2: Längenwert
- P: Druck
- P1: unterer Druck
- P2: oberer Druck
- t: Zeitachse
- S: Weg, Position
- S_{O}: Wegsignal-Anfangswert
- S_{A}: Positionswert bei Anlagedruck
- S_{M}: Positionswert bei unbetätigter Bremse
- S_{V}: Verschleißwert
- Z: Zustellweg

## Patentansprüche

1. Verfahren zur Kontrolle des Bremsbelagverschleißes einer Gleitsattel-Scheibenbremse, welche einen chassisfesten Bremsträger und einen diesem gegenüber verschieblich angeordneten, eine Bremsscheibe und die Bremsbeläge übergreifenden Bremssattel umfasst, wobei
- Verschiebungen des Bremssattels (4) relativ zu dem Bremsträger (2) als Wegsignale mittels eines Positions- oder eines Wegsensors (31) erfasst werden,
- Bremsdrücke als Drucksignale (55) erfasst werden,
und die so erfassten Weg- und Drucksignale einer Auswerte- und Kontrolleinheit (40) zugewiesen werden, **gekennzeichnet durch** die folgenden Schritte:
a) Nach Bestückung der Bremse mit neuen, unbenutzten Bremsbelägen Bestimmen oder Setzen eines Wegsignal-Anfangswerts (S_{O}),
b) im Laufe des weiteren Bremsbetriebs Erfassen eines oder mehrerer Wegsignale und vorläufiges Speichern des so erfassten Signals oder eines gemittelten Werts der so erfassten Signale als aktueller Positionswert (S_{P}), soweit zum jeweiligen Erfassungszeitpunkt das Drucksignal (55) in dem Wertebereich P1 bis P2 liegt,
c) mehrfaches Wiederholen des Schritts b), wobei der zuletzt aktualisierte Positionswert (S_{P}) als gültiger Verschleißwert (S_{V}) dann geführt wird, wenn seine Differenz zu dem Wegsignal-Anfangswert (S_{O}) um ein vorgegebenes Maß größer als die Differenz zuvor gespeicherter Positionswerte (S_{P}) zu dem Wegsignal-Anfangswert (S_{O}) ist,
d) Abgabe eines Verschleißsignals durch die Auswerte- und Kontrolleinheit (40) dann, wenn die Differenz zwischen dem Verschleißwert (S_{V}) und dem Wegsignal-Anfangswert (S_{O}) einen Maximalwert übersteigt.

2. Verfahren nach Anspruch 1, **dadurch gekennzeichnet, dass** zum Bestimmen des Anfangswerts (S_{O}) eines oder mehrere Wegsignale erfasst werden, soweit zum jeweiligen Erfassungszeitpunkt das Drucksignal (55) in einen vorgegebenen Wertebereich P1 bis P2 liegt, und dass das so erfasste Signal oder ein gemittelter Wert der so erfassten Signale als Anfangswert (S_{O}) gespeichert wird.

3. Verfahren nach Anspruch 1 oder 2, **dadurch gekennzeichnet, dass** die Drucksignale (55) mittels eines Drucksensors erfasst werden.

4. Verfahren nach einem der vorangegangenen Ansprüche, **dadurch gekennzeichnet, dass** der untere Druckwert P1 mindestens gleich jenem Druckwert ist, bei dem beide Bremsbeläge (11, 12) erstmals in Kontakt mit der Bremsscheibe (1) gelangen, und der obere Druckwert P2 niedriger als jener Druckwert ist, bei dem eine Verformung des Bremssattels (4) aufgrund der Bremskräfte einsetzt.

5. Verfahren nach Anspruch 4, wobei das bremsdruckerzeugende Medium Druckluft ist, **dadurch gekennzeichnet, dass** der untere Druckwert P1 mindestens 80 kPa und der obere Druckwert P2 höchstens 150 kPa beträgt.

6. Verfahren nach einem der vorangehenden Ansprüche, **dadurch gekennzeichnet, dass** das erneute Auswerten von Wegsignalen nur erfolgt, wenn die unmittelbar vorhergehenden Drucksignale tiefer als der untere Druckwert P1 des Wertebereichs P1 bis P2 liegen und vorzugsweise tiefer als ein Grenzdruck, bei dem der Bremssattel (4) geöffnet ist.

7. Verfahren nach einem der vorangehenden Ansprüche, **dadurch gekennzeichnet, dass** außerdem die Fahrzeuggeschwindigkeit erfasst und der Auswerte- und Kontrolleinheit (40) ein entsprechendes Geschwindigkeitssignal (56) zugewiesen wird, und dass das erneute Erfassen von Wegsignalen nur bei gleichzeitigem Vorliegen eines vorgegebenen Mindest-Geschwindigkeitssignals erfolgt.

8. Verfahren nach Anspruch 7, **dadurch gekennzeichnet, dass** das Mindest-Geschwindigkeitssignal einer Fahrzeug-Geschwindigkeit von 25 km/h oder mehr entspricht.

9. Verfahren nach einem der vorangegangenen Ansprüche, dass der Verschleißwert (Sv) bei einem Belagwechsel der Bremsbeläge (11, 12) automatisch zurückgesetzt wird.

## Claims

1. Method for monitoring the brake lining wear of a floating calliper disc brake which comprises a brake carrier which is fixed to the chassis and a brake calliper which is slidably arranged with respect to the latter and engages over a brake disc and the brake linings, wherein
- sliding of the brake calliper (4) relative to the brake carrier (2) is recorded as travel signals by means of a position sensor or a travel sensor (31),
- brake pressures are recorded as pressure signals (55),
and the travel and pressure signals which are acquired in this way are assigned to an evaluation and monitoring unit (40), **characterized by** the following steps:
a) after the equipping of the brake with new unused brake linings, determining or setting a travel signal initial value (S_{O}),
b) in the course of the further braking operation, acquiring one or more travel signals and temporarily storing the signal which is acquired in this way or an averaged value of the signals which are acquired in this way as a current position value (S_{P}), in so far as the pressure signal (55) is in the value range P1 to P2 at the respective acquisition time,
c) multiple repetition of the step b), wherein the position value (S_{P}) which was updated last is then recorded as a valid wear value (S_{V}) if its difference from the travel signal initial value (S_{O}) is greater than the difference of the previously stored position values (S_{P}) with respect to the travel signal initial value (S_{O}) by a predefined amount,
d) outputting of a wear signal by the evaluation and monitoring unit (40) if the difference between the wear value (S_{V}) and the travel signal initial value (S_{O}) exceeds a maximum value.

2. Method according to Claim 1, **characterized in that** in order to determine the initial value (S_{O}) one or more travel signals are acquired in so far as the pressure signal (55) is in a predefined value range P1 to P2 at the respective acquisition time, and **in that** the signal which is acquired in this way or an averaged value of the signals which are acquired in this way is stored as an initial value (S_{O}).

3. Method according to Claim 1 or 2, **characterized in that** the pressure signals (55) are acquired by means of a pressure sensor.

4. Method according to one of the preceding claims, **characterized in that** the lower pressure value P1 is at least equal to that pressure value at which both brake linings (11, 12) first enter into contact with the brake disc (1), and the upper pressure value P2 is lower than that pressure value at which deformation of the brake calliper (4) starts owing to the braking forces.

5. Method according to Claim 4, wherein the brake-pressure-generating medium is compressed air, **characterized in that** the lower pressure value P1 is at least 80 kPa and the upper pressure value P2 is at maximum 150 kPa.

6. Method according to one of the preceding claims, **characterized in that** the renewed evaluation of travel signals takes place only if the directly preceding pressure signals are lower than the lower pressure value P1 of the value range P1 to P2 and preferably lower than a limiting pressure at which the brake calliper (4) is opened.

7. Method according to one of the preceding claims, **characterized in that** the vehicle speed is also acquired, and a corresponding speed signal (56) is assigned to the evaluation and monitoring unit (40), and **in that** the renewed acquisition of travel signals takes place only when a predefined minimum speed signal is present simultaneously.

8. Method according to Claim 7, **characterized in that** the minimum speed signal corresponds to a vehicle speed of 25 km/h or more.

9. Method according to one of the preceding claims, **characterized in that** the wear value (S_{V}) is reset automatically when the brake linings (11, 12) are replaced.

## Revendications

1. Procédé de contrôle de l'usure des garnitures de frein d'un frein à disque à étrier flottant, qui comprend un support de frein fixé au châssis et un étrier de frein disposé de manière déplaçable en face de celui-ci et recouvrant un disque de frein et les garnitures de frein, dans lequel
- des déplacements de l'étrier de frein (4) par rapport au support de frein (2) sont détectés en tant que signaux de déplacement au moyen d'un capteur de position ou d'un capteur de déplacement (31),
- des pressions de freinage sont détectées en tant que signaux de pression (55),
et les signaux de déplacement et de pression ainsi détectés sont envoyés à une unité d'évaluation et de commande (40), **caractérisé par** les étapes suivantes :
a) après avoir équipé le frein de garnitures de frein neuves et inutilisées, la détermination ou le réglage d'une valeur de départ du signal de déplacement (S_{O}),
b) au cours du freinage, la détection d'un ou de plusieurs signaux de déplacement et le stockage temporaire du signal ainsi détecté ou d'une valeur moyennée des signaux ainsi détectés en tant que valeur de position actuelle (S_{P}), dans la mesure où le signal de pression (55) se situe dans la plage de valeurs de P1 à P2 à l'instant de détection respectif,
c) la répétition plusieurs fois de l'étape b), dans lequel la dernière valeur de position mise à jour (S_{P}) n'est utilisée en tant que valeur d'usure valide (S_{V}) que si sa différence par rapport à la valeur initiale du signal de déplacement (S_{O}) est supérieure d'une quantité prédéterminée à la différence entre la valeur de position précédemment stockée (S_{P}) et la valeur initiale (S_{O}) du signal de déplacement,
d) la fourniture en sortie par l'unité d'évaluation et de commande (40) d'un signal d'usure lorsque la différence entre la valeur d'usure (S_{V}) et la valeur initiale (S_{O}) du signal de déplacement dépasse une valeur maximale.

2. Procédé selon la revendication 1, **caractérisé en ce que**, pour la détermination de la valeur initiale (S_{O}), un ou plusieurs signaux de déplacement sont détectés, dans la mesure où le signal de pression (55) se situe dans une plage prédéterminée de P1 à P2 à l'instant de détection respectif, et **en ce que** le signal ainsi détecté ou une valeur moyennée des signaux ainsi détectés est stocké en tant que valeur initiale (S_{O}).

3. Procédé selon la revendication 1 ou 2, **caractérisé en ce que** les signaux de pression (55) sont détectés au moyen d'un capteur de pression.

4. Procédé selon l'une des revendications précédentes, **caractérisé en ce que** la valeur de pression inférieure P1 est au moins égale à la valeur de pression pour laquelle les deux garnitures de frein (11, 12) entrent en contact pour la première fois avec le disque de frein (1), et la valeur de pression supérieure P2 est inférieure à la valeur de pression pour laquelle il se produit une déformation de l'étrier (4) due aux forces de freinage.

5. Procédé selon la revendication 4, dans lequel le fluide générateur de pression de freinage est de l'air comprimé, **caractérisé en ce que** la valeur de pression inférieure P1 est d'au moins 80 kPa et la valeur de pression supérieure P2 est d'au plus 150 kPa.

6. Procédé selon l'une des revendications précédentes, **caractérisé en ce que** l'évaluation renouvelée des signaux de déplacement n'est effectuée que si les signaux de pression immédiatement précédents sont inférieurs à la valeur de pression inférieure P1 de la plage de valeurs de P1 à P2, et de préférence inférieurs à une pression limite à laquelle l'étrier de frein (4) est ouvert.

7. Procédé selon l'une des revendications précédentes, **caractérisé en ce que** la vitesse du véhicule est en outre détectée et un signal de vitesse (56) correspondant est envoyé à l'unité d'évaluation et de commande (40), et **en ce que** la détection renouvelée des signaux de déplacement n'est effectuée qu'en cas de présence simultanée d'un signal de vitesse minimale prédéfini.

8. Procédé selon la revendication 7, **caractérisé en ce que** le signal de vitesse minimale correspond à une vitesse du véhicule de 25 km/h ou plus.

9. Procédé selon l'une des revendications précédentes, **caractérisé en ce que** la valeur d'usure (S_{V}) est automatiquement remise à zéro lorsque les garnitures de frein (11, 12) sont remplacées.
